# EUROPEAN PATENT APPLICATION

(11) **EP 1 496 681 A1**
(43) Date of publication of application: **12.01.2005**
(21) Application number: 03291726.2
(22) Date of filing: 11.07.2003
(51) Int. Cl.: H04N 1/00

(54) **A method for printing an image on a support**

(71) Applicant: Axalto S.A., 92120 Montrouge (FR)
(72) Inventor: Gonzalez, Maria, 45650 St Jean le Blanc (FR); Coquery, Eric, 45240 Ligny le Ribault (FR)
(74) Representative: Renault, Patricia Marie Jacqueline

(57) **Abstract**

The invention concerns a method for printing an image on a final support, the image being defined by a first, image file, comprising the steps of:
- deriving a production file from the image file, said production file containing data used by a production machine for either executing an intermediate support used for printing that image on the final support, or printing the image on the final support ; and
- executing printing by using said production file ;
characterized in that it includes the further steps of :
- deriving a test image from the production file before using it ;
- comparing said test image with that to be obtained on the final support and pointing out any difference between them ;
- correcting the production file for canceling said differences ;
- executing printing based on the corrected production file.

## Description

### 1 - Introduction

The invention concerns a method for printing an image on a final support, in which the image is defined by a first, image file, and a production file is derived from the image file, said production file containing data used by a production machine for either executing an intermediate support used for printing that image on the final support, or printing the image on the final support. In the printing process, it was found that errors took place resulting in differences between the printed image and the original image to be printed. Execution of the production file can lead to errors, such as the following ones :
- wrong color;
- wrong font of the characters to be typed ;
- in case the image comprises several layers of superimposed images, a wrong order of the layers.
   Several reasons explain these errors, For example, one of them (wrong font of the characters) results from the fact that the current release of the production file used ignores this font.

An erroneous production session results in several drawbacks (additional production sessions, a number of supports wasted, protests of the client, .... ). To be able to detect this kind of defect at the beginning of the manufacturing process, a software was developed for helping in the decision of accepting or rejecting a production file at an early stage of the process.

For example, in a process of printing plastic sheets, a "prepress step" was defined, corresponding to the step of manufacturing printing plates used in such printing. In this case, the early stage for checking the process is that of executing the prepress controls. A control can now be performed to compare images issued from the production file and images issued from the native file (Client color proof).

Accordingly, the invention concerns a method for printing an image on a final support, the image being defined by a first, image file, comprising the steps of :
- deriving a production file from the image file, said production file containing data used by a production machine for either executing an intermediate support used for printing that image on the final support, or printing the image on the final support ; and
- executing printing by using said production file ;
characterized in that it includes the further steps of :
- deriving a test image from the production file before using it ;
- comparing said test image with that to be obtained on the final support and pointing out any difference between them ;
- correcting the production file for canceling said differences ;
- executing printing based on the corrected production file.

Advantageously, the step of comparing said images includes defining a third image on which only that parts of the image to be corrected are brought out, and the step of correcting the production file includes looking at the third image for pointing out any difference between said two images.

Details of the invention will be now given in the following description of a preferred embodiment, with the help of the enclosed drawings in which :
Figure 1 illustrates transformation of the Client color proof into the production file, and the format in which these two files are compared ; and
Figure 2 illustrates the practical manner in which these two files are compared.

### 2 - Setup requirements of this embodiment

A vision system to resolve the problem mentioned above has been developed to fit the prepress workshop, in the particular environment of a smart card manufacturing center. Of course, this description does not limit the scope of the invention, since alternative practical steps are possible for carrying out the invention.

### Prepress comparison process

Mission of this workshop is to deliver printing plates to the printing shop from folders developed by a "Check & Print" studio. These folders include a pdf extension file considered as the customer reference (Client color proof).
The vision system describes in this document has been developed especially for a prepress workshop that applies a CTP (Computer To Plate) process as described below. A CTP process is a fully digital process to build printing plates from the digital file issued by the "Check & Print" studio.

Before sending a digital file to the imposition system, a 200% tracer including recto & verso of the card is printed. To be able to perform this print, a "RIP" file is processed and its result is an image equivalent to the one given by an offset printing process : every time a file is sent to the imposition system, a pdf extension file can be generated and used to perform the comparison with the Client color proof file. (The RIP file allows interpretation of postscript commands into a bitmap file which can be understood by the printing machine).

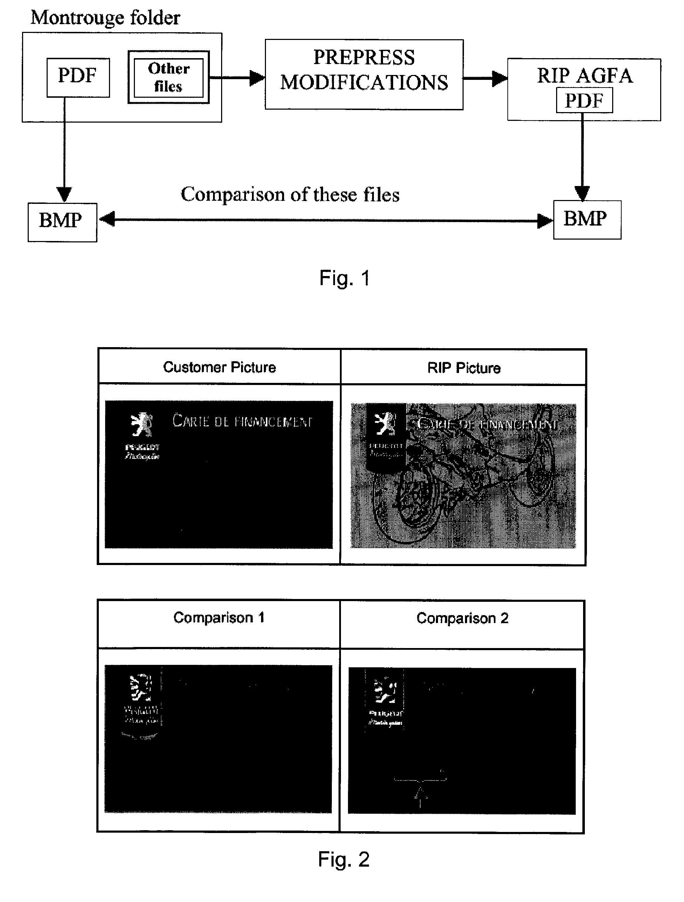

On figure 1, the box on the left comprises the files defining the Client color proof, namely a PDF file defining the image, and "other files" which are auxiliary files used for providing the production file or "RIP" file. In the middle box, prepress modifications are mentioned, which comprises any conversion of the Client files into the production file. The result is the right box, that is the production file or "RIP" file, also in PDF format.

In this example, it was found that the PDF format of the files (PDF of the Client and the production file RIP) was not appropriate to enable a picture comparison. Accordingly, these files were converted into BMP extension files, as shown on figure 1. It is recalled that a BMP file is an image coded in the basic colors red, green, blue.

After comparison, any difference detected is taking into account by modifying accordingly the production file RIP in order to cancel the error.

The system presented here was designed to the needs of a particular manufacturing center. Meanwhile, this system may be adjusted to other prepress shop, particularly if the following items are available:
- A customer client folder including a pdf extension file,
- A RIP file including all colors.
- Availability of a computer network in the prepress workshop to be able to transfer the 2 pdf extension files to a dedicated Printing assistance computer.

Picture comparison is now described with the help of figure 2 which comprises two rows of images. In the upper row are displayed the two initial pdf extension files: the one issued from the Client file at the left, and the one issued from the prepress process (RIP) at the right.
The lower row displays the computation results. Two comparisons are available due to two possible processes. As the two comparison processes are different, errors may appear in one result only and not in the second one. Meanwhile whatever is in black is correct, errors being notified with color different from black and must be considered as warnings.
As this software is considered as decision making software, any potential defect are displayed but must be analyzed by the operator for a verification. Example: a Pantone color is never displayed as a true color in Client color proof.

### Example of interpretation :

In comparison 1 column of figure 2, whatever is displayed in black can be considered as correct. So the visible
warnings are:
- The background color,
- Shift of "Peugeot Motorcycles" logo,
- Character font: "Carte de Financement".

In comparison 2 column, whatever is displayed in black can be considered as correct. So the visible
warnings are:
- Shift of "Peugeot Motorcycles" logo,
- Character font: "Carte de Financement",
- A visible defect on the rear wheel (pointed by an arrow).

As demonstrated above, many warnings are displayed in the two comparisons and a few of these warnings are included in one comparison only. So, the operator must carefully control the results and perform an interpretation process before correcting the RIP file, as these warnings may not be important according to a human point of view.

## Claims

1. A method for printing an image on a final support, the image being defined by a first, image file, comprising the steps of :
- deriving a production file from the image file, said production file containing data used by a production machine for either executing an intermediate support used for printing that image on the final support, or printing the image on the final support ; and
- executing printing by using said production file ;
**characterized in that** it includes the further steps of :
- deriving a test image from the production file before using it ;
- comparing said test image with that to be obtained on the final support and pointing out any difference between them ;
- correcting the production file for canceling said differences ;
- executing printing based on the corrected production file.

2. The method of claim 1, wherein the step of comparing said images includes defining a third image on which only those parts of the image to be corrected are brought out, and the step of correcting the production file includes looking at the third image for pointing out any difference between said two images.
